# EUROPEAN PATENT SPECIFICATION

(11) **EP 2 911 874 B1**
(45) Date of publication and mention of the grant of the patent: **20.09.2017**
(21) Application number: 13849444.8
(22) Date of filing: 28.10.2013
(51) Int. Cl.: B32B 7/06, G09F 3/00, G09F 15/00, G09F 3/02

(54) **COLOR-CHANGING SEALANT**
FARBWECHSELNDE DICHTUNGSMITTEL
ÉLÉMENT D'ÉTANCHÉITÉ CHANGEANT DE COULEUR

(30) Priority: 26.10.2012 US 201261718793 P
(43) Date of publication of application: 02.09.2015
(73) Proprietor: Dodrill, Douglas R., Addison, IL 60101 (US)
(72) Inventor: Dodrill, Douglas R., Addison, IL 60101 (US)
(74) Representative: HGF Limited
(86) International application number: PCT/US2013/067050
(87) International publication number: WO 2014/066886

(56) References cited:
- US-A- 5 492 411
- US-A- 5 882 749
- US-A- 5 997 968
- US-A1- 2005 258 634
- US-A1- 2006 088 695
- US-B1- 6 428 867
- US-B2- 6 902 817

## Description

### Technical Field of the Invention

The present application relates to sealant technology, and more particularly to thin film sealing elements.

### Background of the Invention

Sealants are found in many different forms. Sealants can be a stand-alone product capable of securing two objects together or can be embedded within a substrate to secure two sides of a package together. For example, many laminated products include a heat seal around one or more edges of the product. The seal is effected by applying heat and/or pressure to multiple films and causing mechanical bonding between two or more of the films.

Sealants are also commonly used in tamper-evident packages. Tamper-evident packages are used in a variety of fields to determine whether a package has been opened or otherwise tampered with. For example, the medical industry uses tamper-evident packaging to show when a sterile package has been opened and exposed to a non-sterile atmosphere, at times compromising the safe use of the contents of the package.

Current tamper-evident packaging does not provide strong visual evidence that the seal has been opened Conventional medical packaging generally only displays an indicator that does not change the color of the film from which it originated In the event that the user (such as a doctor, nurse, or other medical professional) is not aware that the seal has been opened, the contents of the package may be used in an unsafe manner.

In addition, the colorless or mono-colored film provides no marketing advantages, and counterfeiters can easily replicate the package due to its visual simplicity.

US 6428867 discloses a resealable label flap for use with a product package including a tamper indicating tab that remains in contact with the package body to indicate that the label flap has been removed from the package body. US 5492411 discloses a tamper evident peelable seal and a closure arrangement for a polymeric bag with first and second opposing films comprising first and second opposing base strips, a first peelable strip of a first color and a second peelable strip of a second color. US 2005/0258634 discloses color changing tape, label, card and game intermediates for evidence of use, concealing proprietary information or ganging or promotional information until the intermediate is separated. US 5882749 discloses a heat sealed, easy-opening and reclosable package. US5997968 discloses a peelable, heat-sealable, multilayered polyolefin film, process for the production thereof, and the use thereof. US 2006/0088695 discloses a multilayer film having two or more separable adjacent layers.

### Summary of the Invention

The present application discloses a sealing element that visually indicates when the sealing element has been peeled by transferring a contrasting colored peel layer from a first surface of the sealing element to a second surface. For example, the sealing element can include a first side and a second side coupled together by the peel layer. The first side can include two layers of complementary colors (e.g., red and blue) that together make up a secondary color (e.g., purple). The layers of the film are seen collectively so a user sees the film as purple rather than two separate layers of red and blue. The blue layer can couple to the second side of the sealing element as a peel layer and can transfer to the second side through cohesive peeling. Therefore, peeling of the sealing element exposes a blue-colored peel layer, which visually indicates to the user that the sealing element has been peeled apart. The sealing element can be used in tamper-evident packaging to visually indicate when the sealing element has been peeled apart, and the color scheme of the sealing element can be used for branding purposes to effectively market objects used with the sealing element. Security and marketing can be improved while counterfeiting can be reduced. The color-changing behavior provides a positive identifier for product authenticity.

For example, the present application includes a sealing element including a bulk layer having a first coloring agent of a first color, a second film, and a peel layer having a second
coloring agent of a second color coupled to the bulk layer and the second film The peel layer is coupled to the bulk layer and the second film prior to peeling. The peel layer is adapted to cohesively peel upon application of a peeling force such that the peel layer is coupled to the second film in the sealed areas after peeling. The first color of the bulk layer is complementary to the second color of the peel layer such that the first color and the second color collectively form a secondary color.

The present application also includes a sealing element including a first bulk layer having a first coloring agent of a first color, a second bulk layer coupled to the first bulk layer, a second film, and a peel layer having a second coloring agent of a second color coupled to the second bulk layer and the second film, the peel layer adapted to cohesively peel upon application of a peeling force such that the peel layer is coupled to the second bulk layer and the second film prior to peeling, and the peel layer is coupled to the second film after peeling.

In addition, the present application includes a method of manufacturing a sealing element including blending a first coloring agent of a first color with a bulk layer, blending a second coloring agent of a second color with a peel layer, extruding (1) the first coloring agent and the bulk layer, and (2) the second coloring agent and the peel layer, to form a first side of a sealing element having a secondary color formed from the first color and the second color, providing a second film, sealing the bulk layer, peel layer, and second film to achieve the sealing element having a cross section of a bulk layer, peel layer, and second film, respectively.

### Brief Description of the Drawings

For the purpose of facilitating an understanding of the subject matter sought to be protected, there are illustrated in the accompanying drawings embodiments thereof, from an inspection of which, when considered in connection with the following description, the subject matter sought to be protected, its construction and operation, and many of its advantages should be readily understood and appreciated.
FIG. 1 is a prospective view of the sealing element in a pre-peeled state according to one embodiment of the present application.
FIG. 2 is a prospective view of the sealing element in a partially-peeled state according to one embodiment of the present application.
FIG. 3 is a view in section of layers of one embodiment of the present application.
FIG. 4 is a view in section of layers of a second embodiment of the present application.

It should be understood that any materials, dimensions and tolerances discussed herein are simple proposals such that one of ordinary skill in the art would be able to modify the proposals within the scope of the present application.

### Detailed Description of the Embodiments

While this invention is susceptible of embodiments in many different forms, there is shown in the drawings, and will herein be described in detail, embodiments of the invention with the understanding that the present disclosure is to be considered as an exemplification of the principles of the invention and is not intended to limit the broad aspect of the invention to embodiments illustrated.

The present application discloses a sealing element that utilizes cohesive peeling to visually indicate when a sealing element has been opened. In one embodiment, the peel layer and bulk layer are connected together and contain coloring agents which are complementary colors that together make up a secondary color. For example, the peel layer can include a yellow dye or pigment and the bulk layer can include a blue dye or pigment so that together the layer appears green prior to peeling, but after peeling, the yellow peel layer transfers to the other side of the sealing element to visually indicate that the sealing element has been opened.

Alternatively, the first side of the sealing element can include any color peel layer that transfers to the second side of the sealing element to visually indicate when the sealing element is opened. For example, the sealing element can include a red-colored peel layer and a yellow colored film on the second side, causing an orange indicator once the seal is opened.

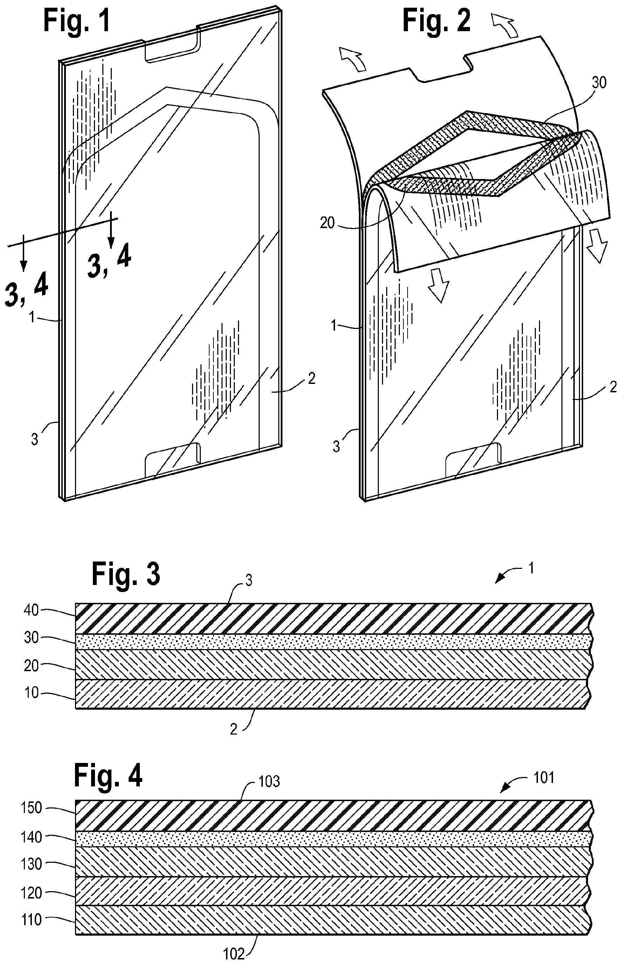

FIGS. 1 and 2 illustrate a package having the sealing element 1 on at least a portion of its peripheral edges, with FIG. 1 illustrating the pre-peeled or closed configuration and FIG. 2 illustrating a partially-peeled or open configuration. FIG. 3 discloses a cross-section of the sealing element 1. The sealing element 1 includes a first side 2 and a second side 3 opposite the first side 2. Prior to peeling, the layers of the sealing element 1 include a first film 10, bulk layer 20, and peel layer 30 on the first side 2, and a second film 40 on the second side 3. The first film 10 and second film 40 can make up the structural backbone of the sealing element 1 on the first side 2 and second side 3, respectively. In an embodiment, the coloring agents of the bulk layer 20 and peel layer 30 together make up the color of the first side 2 visual to the user, preferably as complementary colors that together make up a secondary color.

The first film 10 can be made of any of various materials known in the art, such as polymeric materials. For example, the first film 10 can be made of polyethylene, polyester, nylon, polypropylene, or any of various other polymer materials acting as a structural backbone of a package or sealing element 1. The first film 10 need not be implemented into the sealing element 1, and instead the bulk layer 20 can form the structural backbone of the sealing element 1, for example.

In this embodiment, the bulk layer 20 cooperates with the peel layer 30 to create the visual appearance of a pre-peel color that is visible to a user to indicate that the sealing element has not been peeled apart. After peeling, the bulk layer 20 will remain coupled to the first film 10, while the peel layer 30 will be transferred to the second film 40 by way of cohesive peeling. The bulk layer 20 can be made of any of various materials known in the art, such as low-density polyethylene, linear low density polyethylene, or any other polymer.

The peel layer 30 acts as the visual indicator that the sealing element 1 has been peeled apart. Prior to peeling, the color of the peel layer visually appears as a secondary color based on the combination of the peel layer 30 and bulk layer 20. After peeling, the peel layer 30 is separated from the bulk layer 20 and each reveal their individual colors. For example, in an embodiment, the peel layer 30 can include a coloring agent of a first color, while the bulk layer 20 can include a coloring agent of a second color that is complementary to the coloring agent of the peel layer 30 so as to create a secondary color when the two layers are coupled together. For example, the peel layer 30 can include a yellow dye or pigment while the bulk layer 20 can include a blue dye or pigment, so as to create a green appearance prior to peeling, but the peel layer 30 showing a yellow color on the second film 40 after peeling. The peel layer 30 can be made of any of various materials or combinations of materials, for example, a blend of a base polymer (such as low-density polyethylene) and an incompatible polymer (such as polybutene). The incompatible polymer can weaken the bonds between the polymer chains to allow for easier separation of the peeling component of the sealing component.

The second film 40 is similar to the first film 10 by acting as a structural backbone for the sealing element 1. The second film 40 can also be made of any of various materials and may have multiple layers, polymeric or otherwise, for example, polyethylene, polyester, nylon, polypropylene, or any of various other polymers. In this embodiment the second film 40 may contain a coloring agent that is colored so as to contrast with the coloring agent of the peel layer 30 once the peel layer 30 is transferred on to the second film 40. For example, the second film 40 can include white colored material, whereas the peel layer 30 can include blue colored material. Upon opening of the seal, a blue color on the second film 40 will visually indicate to a user that the sealing element 1 has been peeled apart. Any other color combinations can be used without departing from the spirit and scope of the present application. For example, the second film 40 can be clear.

The embodiment discussed above with respect to FIG. 3 illustrates how a peel layer 30 of one color and a bulk layer 20 of another color can form a secondary color when coupled together, but after being peeled away, can show two complementary colors that indicate to the user that the package has been opened. The above embodiment is not limited to complementary colored peel layers 30 and bulk layers 20, and such layers can include any of various materials of any of various colors. Also, the number and size of layers shown in the figures are merely examples.

FIG. 4 discloses another embodiment of the present application where a second bulk layer can be provided between the peel layer and the first bulk layer and where complementary colors need not be used. For example, as shown, FIG. 4 illustrates a sealing element 101 having a first side 102, a second side 103, a first film 110, a first bulk layer 120, a second bulk layer 130, a peel layer 140, and a second film 150. The first film 110 and second film 150 are similar to the first film 10 and second film 40 of the embodiment discussed above with respect to FIG. 3, wherein the first 110 and second 150 films form the structural backbone of the sealing element 101. Even more so in FIG. 4, the first bulk layer 120 and the peel layer 140 do not need to be complementary colors that form a secondary color. Rather, the peel layer 140 can be separated from the first bulk layer 120 by a second bulk layer 130 that is colored or otherwise colorless so as not to alter the color of the peel layer 140 or the first bulk layer 120. For example, the second bulk layer 130 may be white or black. In another embodiment, the second bulk layer 130 may be opaque. After peeling, the peel layer 140 can still be transferred to the second film 150 by cohesive peeling, but without requiring the first 120 and second 130 bulk layers to be any specific color. The sealing element 101 can therefore be any combination of colors and is not limited, in this embodiment or in the sealing element 1 discussed above with respect to FIG. 3, to having a peel layer and bulk layer of complementary colors.

The first film 110, second film 150, and peel layer 140 can be made of any of various materials, including the same or a different material as the first film 10, second film 40, and peel layer 30, respectively, of FIG. 3. Similarly, the first bulk layer 120 and second bulk layer 130 can be made any of various materials, including the same or a different material as the bulk layer 20 of FIG. 3.

The bulk layer 20 and the second bulk layer 130 can be made of a pressure-sensitive adhesive such that the sealing element 1, 101 can be resealed. In this embodiment, the peel layer 30, 140 can be transferred from the first side 2, 102 to the second side 3, 103 as discussed above to provide a visual indication of tampering. However, after opening, the sealing element 1, 101 can be resealed by simply applying pressure to the sealing element and thereby coupling the pressure-sensitive adhesive of the bulk layer 20 or the second bulk layer 130 with the second film 40, 150, respectively.

As shown in FIGS. 1 and 2, the sealing element 1, 101 may be configured as a solid strip along at least a portion of the peripheral edges of the package. In an embodiment, the attempted resealing of an opened color-changing seal can be visually indicated to the user by incorporating any various designs within the sealing element 1, 101. For example, the sealing element 1, 101 may incorporate a series of small, thin rings or other outlines within the strip of the sealing element where, upon peeling, the peel layer 30 does not transfer to the second film 40 and remains coupled to the bulk layer 20. Accordingly, should a user attempt to reseal the sealing element by recoupling bulk layer 20 with the second film 40, the series of rings must align perfectly in order for the sealing element to appear as though it was not previously opened. Incorporating the design within the sealing element 1, 101 provides a mechanism that allows a user to determine whether the sealing element 1, 101 has been peeled apart and subsequently resealed. It should be appreciated that any number of designs may be incorporated into the sealing element so long as the design does not occupy the full width of the sealing element, thereby destroying the integrity of the seal.

When manufacturing, the bulk layer 20 and peel layer 30 can be coextruded, or can be extruded or manufactured separately and combined together by any of various known means. For example, the bulk layer 20 and peel layer 30 can be combined by means of pressure, temperature, lamination, coating, or coextrusion. In an illustrative embodiment, the bulk layer 20 and peel layer 30 are coextruded, and the seal between the peel layer 30 and the second film 40 is effected through heat sealing, ultrasonic sealing, or impulse sealing. The same applies for the embodiment of FIG. 3.

The above disclosure provides a coloring mechanism that allows a user to determine whether the sealing element 1, 101 has been peeled apart. Accordingly, the sealing element 1, 101 can be used in a tamper-evident package and the contents of the sealing element 1, 101 can remain sterile until opened. Opening of the color-changing seal can be strongly and visually indicated to the user. The sealing element can include any of various colors, such as colors of a particular brand, hospital or any other color combination. Accordingly, branding can be applied to the sealing element 1, 101 and utilized for marketing purposes. In addition, the color-changing mechanism can be used to deter counterfeiting as the effect is difficult to duplicate.

The various films and sealants are discussed above as, in some cases, having a color attribute. While certain of the films or layers are described as having a color attribute it should be appreciated that others of the various layers may incorporate color attributes. Similarly, the films and sealants can be colored by any of various known means, including pigment, dye, or other coloring agent. The coloring agent can be concentrated, compounded, and/or combined into a polymer, and then blended with other resins associated with the films and sealants prior to extrusion. Other means of coloring the films and sealants can be implemented without departing from the spirit and scope of the present application.

The present application discusses color-transfer technology as applied to films. However, the color-transfer mechanism can be applied to any of various structures. For example, the second film 40 can be a cup, tray, flange, rim, board, base, shaft, or other structure. In one embodiment, the second film 40 is a tray that visually indicates when the peel layer 30 has been transferred.

The matter set forth in the foregoing description and accompanying drawings is offered by way of illustration only and not as a limitation. While particular embodiments have been shown and described, it will be apparent to those skilled in the art that changes and modifications may be made without departing from the broader aspects of applicants' contribution. The actual scope of the protection sought is intended to be defined only in the claims of the nonprovisional application when viewed in their proper perspective based on the prior art.

## Claims

1. A package having opposing first (2) and second (3) sides defining an interior therebetween that is accessible in an open configuration and is substantially not accessible in a closed configuration, the package comprising:
a first film (10) disposed proximate the first side (2) including a bulk layer (20) having a first coloring agent of a first color and a peel layer (30) coupled to the bulk layer (20) and having a second coloring agent of a second color, wherein the first and second colors cooperatively create a third color; and
a second film (40) disposed proximate the second side (3) and coupled to the peel layer (30) at a seal located on at least part of a periphery of the first (10) and second (40) films, the peel layer (30) detached from the second film (40) in areas other than the seal (1),
wherein the peel layer (30) is releasably coupled to the bulk layer (20) and the second film (40) at the seal (1) to show the third color when the package is in the closed configuration, and the peel layer (30) is coupled to the second film (40) and spaced from the bulk layer (20) at the seal (1) upon application of a peeling force to show the second color when the package is in the open configuration.

2. The package of claim 1, wherein the bulk layer (20) includes a pressure- sensitive adhesive that allows the bulk (20) and peel (30) layers to be releasably coupled to each other.

3. The package of claim 1, wherein the peel layer (30) includes a base polymer and an incompatible polymer that weakens bonds in the base polymer.

4. The package of claim 1, wherein the seal(1) is configured as a solid strip.

5. The package of claim 1, further comprising a tamper-evident structure that prevents recoupling of the peel layer (30) to the bulk layer (20) after application of the peeling force.

6. A package having opposing first (102) and second (103) sides defining an interior therebetween that is accessible in an open configuration and is substantially not accessible in a closed configuration, the package comprising:
a first film (110) disposed proximate the first side (102) including a first bulk layer (120) having a first coloring agent of a first color, a second bulk layer (130) coupled to the first bulk layer (120), and a peel layer (140) coupled to the second bulk layer (130) and having a second coloring agent of a second color; and
a second film (150) disposed proximate the second side (103) and coupled to the peel layer (140) at a seal (1) located on at least part of a periphery of the first (110) and second (150) films, the peel layer (140) being detached from the second film (150) in areas other than the seal (101),
wherein the peel layer (140) is coupled to the second bulk layer (130) and the second film (150) at the seal (101) when the packages is in the closed configuration, and the peel layer (140) is coupled to the second film (150) and separated from the second bulk layer (130) at the seal (101) upon application of a peeling force to show the second color when the package is in the open configuration.

7. The package of claim 6, wherein the second bulk layer (130) is composed of a pressure-sensitive adhesive that allows the second bulk layer (130) to recouple to the peel layer (140) after application of the peeling force.

8. The package of claim 6, wherein the peel layer (140) includes a base polymer and an incompatible polymer that weakens bonds in the base polymer.

9. A method of manufacturing a package having opposing first (2,102) and second (3,103) sides defining an interior therebetween that is accessible in an open configuration and is substantially not accessible in a closed configuration, the method comprising:
blending a first coloring agent having a first color with a bulk layer (20,120);
blending a second coloring agent having a second color with a peel layer (30,140), wherein the first and second colors cooperatively create a third color;
extruding the first coloring agent and the bulk layer (20,120), and the second coloring agent and the peel layer (30,140), to form the first side (2,102);
disposing a second film (40,150) on the peel layer (30,140), wherein the second film (40,150) forms the second side (3,103);
forming a seal (1,101) coupling the bulk layer (20,120), peel layer (30,140), and second film (40,150), the seal (1,101) being on at least part of a periphery of the package and the peel layer (30,140) detached from the second film (40,150) in areas other than the seal (1,101),
wherein the peel layer (30,140) is coupled to the bulk layer (20,130) and the second film (40,150) at the seal (1,101) and is configured to show the third color when the package is in the closed configuration, and the peel layer (30,140) is coupled to the second film (40,150) and spaced from the bulk layer (20,130) at the seal (1,101) upon application of a peeling force and is configured to show the second color when the package is in the open configuration.

10. The method of manufacturing according to claim 9, wherein the step of forming the seal (1,101) is effected by one of heat, ultrasonic or impulse sealing.

11. The method of manufacturing according to claim 9, wherein the step of extruding is conducted by co-extruding the first coloring agent and the bulk layer (20,130), and the second coloring agent and the peel layer (30,140).

12. The method of manufacturing according to claim 9, wherein the step of extruding is conducted by separately extruding the first coloring agent and the bulk layer (20,130), and the second coloring agent and the peel layer (30,140).

## Patentansprüche

1. Einheit mit entgegengesetzten ersten (2) und zweiten (3) Seiten, die dazwischen einen Innenraum definieren, der in einer offenen Konfiguration zugänglich ist, und der in einer geschlossenen Konfiguration im Wesentlichen nicht zugänglich ist, wobei die Einheit folgendes umfasst:
einen ersten Film (10), der proximal zu der ersten Seite (2) angeordnet ist, eine Füllschicht (20) mit einem ersten Farbstoff in einer ersten Farbe aufweisend, und eine Abziehschicht (30), die mit der Füllschicht (20) verbunden ist und einen zweiten Farbstoff in einer zweiten Farbe aufweist, wobei die erste und die zweite Farbe zusammenwirkend eine dritte Farbe erzeugen; und
einen zweiten Film (40), der proximal zu der zweiten Seite (3) angeordnet und an einer Dichtung, die sich an wenigstens einem Teil einer Peripherie des ersten (10) und zweiten (40) Films befindet, mit der Abziehschicht (30) verbunden ist, wobei die Abziehschicht (30) in anderen Bereichen als der Dichtung (1) von dem zweiten Film (40) gelöst ist;
wobei die Abziehschicht (30) lösbar mit der Füllschicht (20) und dem zweiten Film (40) an der Dichtung (1) verbunden ist, so dass die dritte Farbe gezeigt wird, wenn sich die Einheit in der geschlossenen Konfiguration befindet, und wobei die Abziehschicht (30) nach Ausübung einer Abziehkraft an der Dichtung (1) mit dem zweiten Film (40) verbunden und zu der Füllschicht (20) mit Zwischenabstand angeordnet ist, so dass die zweite Farbe gezeigt wird, wenn sich die Einheit in der offenen Konfiguration befindet.

2. Einheit nach Anspruch 1, wobei die Füllschicht (20) einen Kontaktklebstoff aufweist, der es ermöglicht, dass die Füllschicht (20) und die Abziehschicht (30) lösbar miteinander verbunden werden können.

3. Einheit nach Anspruch 1, wobei die Abziehschicht (30) ein Basispolymer und ein inkompatibles Polymer aufweist, welches die Bindungen in dem Basispolymer schwächt.

4. Einheit nach Anspruch 1, wobei die Dichtung (1) als ein fester Streifen gestaltet ist.

5. Einheit nach Anspruch 1, wobei diese ferner eine manipulationssichere Struktur umfasst, die eine erneute Verbindung der Abziehschicht (30) mit der Füllschicht (20) nach Ausübung der Abziehkraft verhindert.

6. Einheit mit entgegengesetzten ersten (102) und zweiten (103) Seiten, die dazwischen einen Innenraum definieren, der in einer offenen Konfiguration zugänglich ist, und der in einer geschlossenen Konfiguration im Wesentlichen nicht zugänglich ist, wobei die Einheit folgendes umfasst:
einen ersten Film (110), der proximal zu der ersten Seite (102) angeordnet ist, eine Füllschicht (120) mit einem ersten Farbstoff in einer ersten Farbe aufweisend, eine zweite Füllschicht (130), die mit der ersten Füllschicht (120) verbunden ist, und eine Abziehschicht (140), die mit der zweiten Füllschicht (130) verbunden ist und einen zweiten Farbstoff in einer zweiten Farbe aufweist;
einen zweiten Film (150), der proximal zu der zweiten Seite (103) angeordnet und an einer Dichtung (1), die sich an wenigstens einem Teil einer Peripherie des ersten (110) und zweiten (150) Films befindet, mit der Abziehschicht (140) verbunden ist, wobei die Abziehschicht (140) in anderen Bereichen als der Dichtung (101) von dem zweiten Film (150) gelöst ist;
wobei die Abziehschicht (140) mit der zweiten Füllschicht (130) und dem zweiten Film (150) an der Dichtung (101) verbunden ist, wenn sich die Einheit in der geschlossenen Konfiguration befindet, und wobei die Abziehschicht (140) nach Ausübung einer Abziehkraft an der Dichtung (101) mit dem zweiten Film (150) verbunden und von der zweiten Füllschicht (130) getrennt ist, so dass die zweite Farbe gezeigt wird, wenn sich die Einheit in der offenen Konfiguration befindet.

7. Einheit nach Anspruch 6, wobei die zweite Füllschicht (130) aus einem Kontaktklebstoff besteht, der es ermöglicht, dass die zweite Füllschicht (130) nach Ausübung der Abziehkraft wieder mit der Abziehschicht (140) verbunden wird.

8. Einheit nach Anspruch 6, wobei die Abziehschicht (140) ein Basispolymer und ein inkompatibles Polymer aufweist, das die Bindungen in dem Basispolymer schwächt.

9. Verfahren zur Herstellung einer Einheit mit entgegengesetzten ersten (2, 102) und zweiten (3, 103) Seiten, die dazwischen einen Innenraum definieren, der in einer offenen Konfiguration zugänglich ist, und der in einer geschlossenen Konfiguration im Wesentlichen nicht zugänglich ist, wobei das Verfahren folgendes umfasst:
Mischen eines ersten Farbstoffs in einer ersten Farbe mit einer Füllschicht (20, 120);
Mischen eines zweiten Farbstoffs mit einer zweiten Farbe mit einer Abziehschicht (30, 140), wobei die erste und die zweite Farbe zusammenwirkend eine dritte Farbe erzeugen;
Extrudieren des ersten Farbstoffs und der Füllschicht (20, 120) und des zweiten Farbstoffs und der Abziehschicht (30, 140), um die erste Seite (2, 102) zu bilden;
Anordnen eines zweiten Films (40, 150) auf der Abziehschicht (30, 140), wobei der zweite Film (40, 150) die zweite Seite (3, 103) bildet;
Bilden einer Dichtung (1, 101), welche die Füllschicht (2, 120), die Abziehschicht (30, 140) und den zweiten Film (40, 150) verbindet, wobei die Dichtung (1, 101) sich wenigstens an einem Teil einer Peripherie der Einheit befindet, und wobei die Abziehschicht (30, 140) von dem zweiten Film (40, 150) in anderen Bereichen als der Dichtung (1, 101) gelöst ist;
wobei die Abziehschicht (30, 140) an der Dichtung (1, 101) mit der Füllschicht (20, 130) und dem zweiten Film (40, 150) verbunden ist und so gestaltet ist, dass die dritte Farbe gezeigt wird, wenn sich die Einheit in der geschlossenen Konfiguration befindet, und wobei die Abziehschicht (30, 140) nach Ausübung einer Abziehkraft an der Dichtung (1, 110) mit dem zweiten Film (40, 150) verbunden und zu der Füllschicht (20, 130) mit Zwischenabstand angeordnet ist und so gestaltet ist, dass sie die zweite Farbe zeigt, wenn sich die Einheit in der offenen Konfiguration befindet.

10. Verfahren zur Herstellung nach Anspruch 9, wobei der Schritt des Bildens der Dichtung (1, 101) durch Heißsiegeln, Ultraschallsiegeln oder Impulssiegeln bewirkt wird.

11. Verfahren zur Herstellung nach Anspruch 9, wobei der Schritt des Extrudierens ausgeführt wird durch Coextrusion des ersten Farbstoffs und der Füllschicht (20, 130) sowie des zweiten Farbstoffs und der Abziehschicht (30, 140).

12. Verfahren zur Herstellung nach Anspruch 9, wobei der Schritt des Extrudierens ausgeführt wird durch separate Extrusion des ersten Farbstoffs und der Füllschicht (20, 130) sowie des zweiten Farbstoffs und der Abziehschicht (30, 140).

## Revendications

1. Colis possédant un premier (2) et un second (3) côtés opposés définissant un intérieur entre ceux-ci qui est accessible dans une configuration ouverte et qui n'est essentiellement pas accessible dans une configuration fermée, le colis comprenant :
un premier film (10) disposé à proximité du premier côté (2) comprenant une couche massive (20) possédant un premier agent de coloration d'une première couleur et une couche d'arrachage (30) couplée à la couche massive (20) et possédant un second agent de coloration d'une seconde couleur, dans lequel les premières et secondes couleurs créent de manière coopérative une troisième couleur ; et
un second film (40) disposé à proximité du second côté (3) et couplé à la couche d'arrachage (30) au niveau d'un joint situé sur au moins une partie d'une périphérie des premier (10) et second (40) films, la couche d'arrachage (30) détachée du second film (40) dans des zones autres que le joint (1),
dans lequel la couche d'arrachage (30) est couplée de manière libérable à la couche massive (20) et au second film (40) au niveau du joint (1) pour montrer la troisième couleur lorsque le colis se trouve dans une configuration fermée, et la couche d'arrachage (30) est couplée au second film (40) et espacée de la couche massive (20) au niveau du joint (1) après application d'une force d'arrachage pour montrer la deuxième couleur lorsque le colis se trouve dans une configuration ouverte.

2. Colis selon la revendication 1, dans lequel la couche massive (20) comprend un adhésif sensible à la pression qui permet aux couches massives (20) et d'arrachage (30) d'être couplées de manière libérable l'une à l'autre.

3. Colis selon la revendication 1, dans lequel la couche d'arrachage (30) inclut un polymère de base et un polymère incompatible qui affaiblit les liaisons dans le polymère de base.

4. Colis selon la revendication 1, dans lequel le joint (1) est configuré en tant que bande solide.

5. Colis selon la revendication 1, comprenant en outre une structure inviolable qui empêche le recouplage de la couche d'arrachage (30) à la couche massive (20) après application de la force d'arrachage.

6. Colis possédant un premier (102) et un second (103) côtés opposés définissant un intérieur entre ceux-ci qui est accessible dans une configuration ouverte et qui n'est essentiellement pas accessible dans une configuration fermée, le colis comprenant :
un premier film (110) disposé à proximité du premier côté (102) comprenant une couche massive (120) possédant un premier agent de coloration d'une première couleur, une seconde couche massive (130) couplée à la première couche massive (100), et une couche d'arrachage (140) couplée à la seconde couche massive (130) et possédant un second agent de coloration d'une seconde couleur ; et
un second film (150) disposé à proximité du second côté (103) et couplé à la couche d'arrachage (140) au niveau d'un joint (1) situé sur au moins une partie d'une périphérie des premier (110) et second (150) films, la couche d'arrachage (140) étant détachée du second film (150) dans des zones autres que le joint (101),
dans lequel la couche d'arrachage (140) est couplée à la seconde couche massive (130) et au second film (150) au niveau du joint (101) lorsque le colis se trouve dans la configuration fermée, et la couche d'arrachage (140) est couplée au second film (150) et séparée de la seconde couche massive (130) au niveau du joint (101) après application d'une force d'arrachage pour montrer la seconde couleur lorsque le colis se trouve dans la configuration ouverte.

7. Colis selon la revendication 6, dans lequel la seconde couche massive (130) est composée d'un adhésif sensible à la pression qui permet à la seconde couche massive (130) de se recoupler à la couche d'arrachage (140) après application de la force d'arrachage.

8. Colis selon la revendication 6, dans lequel la couche d'arrachage (140) inclut un polymère de base et un polymère incompatible qui affaiblit les liaisons dans le polymère de base.

9. Procédé de fabrication d'un colis possédant un premier (2, 102) et un second (3, 103) côtés opposés définissant un intérieur entre ceux-ci qui est accessible dans une configuration ouverte et qui n'est essentiellement pas accessible dans une configuration fermée, le procédé consistant à :
mélanger un premier agent de coloration possédant une première couleur avec une couche massive (20, 120) ;
mélanger un second agent de coloration possédant une seconde couleur avec une couche d'arrachage (30, 140), dans lequel les première et seconde couleurs créent de manière coopérative une troisième couleur ;
extruder le premier agent de coloration et la couche massive (20, 120), et le second agent de coloration et la couche d'arrachage (30, 140), pour former le premier côté (2, 102) ;
déposer un second film (40, 150) sur la couche d'arrachage (30, 140), dans lequel le second film (40, 150) forme le second côté (3, 103) ;
former un joint (1, 101) couplant la couche massive (20, 120), la couche d'arrachage (30, 140), et le second film (40, 150), le joint (1, 101) étant au moins sur une partie d'une périphérie du colis et la couche d'arrachage (30, 140) détachée du second film (40, 150) dans des zones autres que le joint (1, 101),
dans lequel la couche d'arrachage (30, 140) est couplée à la couche massive (20, 130) et au second film (40, 150) au niveau du joint (1, 101) et est configurée pour montrer la troisième couleur lorsque le colis se trouve dans la configuration fermée, et la couche d'arrachage (30, 140) est couplée au second film (40, 150) et espacée de la couche massive (20, 130) au niveau du joint (1, 101) après application d'une force d'arrachage et est configurée pour montrer la seconde couleur lorsque le colis se trouve dans le configuration ouverte.

10. Procédé de fabrication selon la revendication 9, dans lequel l'étape de formation du joint (1, 101) est effectuée par l'un du scellement thermique, du scellement à ultrasons ou du scellement à impulsions.

11. Procédé de fabrication selon la revendication 9, dans lequel l'étape consistant à extruder est effectuée en co-extrudant le premier agent de coloration et la couche massive (20, 130), et le second agent de coloration et la couche d'arrachage (30, 140).

12. Procédé de fabrication selon la revendication 9, dans lequel l'étape consistant à extruder est effectuée en extrudant de manière séparée le premier agent de coloration et la couche massive (20, 130), et le second agent de coloration et la couche d'arrachage (30, 140).
